(19) Europäisches Patentamt
European Patent Office
Office européen des brevets

(11) **EP 3 685 503 B1**

(12) **EUROPÄISCHE PATENTSCHRIFT**

(45) Veröffentlichungstag und Bekanntmachung des Hinweises auf die Patenterteilung:
**11.05.2022   Patentblatt 2022/19**

(21) Anmeldenummer: **18742791.9**

(22) Anmeldetag: **18.07.2018**

(51) Internationale Patentklassifikation (IPC):
**H02P 21/20** (2016.01)      **H02P 21/00** (2016.01)
**H02P 29/02** (2016.01)      **H02P 25/22** (2006.01)

(52) Gemeinsame Patentklassifikation (CPC):
**H02P 21/20; H02P 25/22; H02P 29/02;**
H02P 21/0017; H02P 29/664; H02P 2101/45

(86) Internationale Anmeldenummer:
**PCT/EP2018/069494**

(87) Internationale Veröffentlichungsnummer:
**WO 2019/057362 (28.03.2019 Gazette 2019/13)**

(54) **VERFAHREN ZUM ERMITTELN EINES MAXIMAL STELLBAREN DREHMOMENTS EINER ELEKTRISCHEN MASCHINE**

METHOD FOR DETERMINING A MAXIMALLY ADJUSTABLE TORQUE OF AN ELECTRIC MACHINE

PROCÉDÉ DE DÉTERMINATION D'UN COUPLE MAXIMAL RÉGLABLE D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2017   DE 102017216788**

(43) Veröffentlichungstag der Anmeldung:
**29.07.2020   Patentblatt 2020/31**

(73) Patentinhaber: **SEG Automotive Germany GmbH 70499 Stuttgart (DE)**

(72) Erfinder: **SZEPANSKI, Daniel 71636 Ludwigsburg (DE)**

(74) Vertreter: **DehnsGermany Partnerschaft von Patentanwälten Theresienstraße 6-8 80333 München (DE)**

(56) Entgegenhaltungen:
DE-A1-102015 117 813      US-A1- 2014 292 240
US-B2- 8 475 328

**Beschreibung**

Die vorliegende Erfindung betrifft ein Verfahren zum Ermitteln eines maximal stellbaren Drehmoments einer elektrischen Maschine sowie eine Recheneinheit und ein Computerprogramm zu dessen Durchführung.

Stand der Technik

Elektrische Maschinen, insbesondere Generatoren, können zur Umwandlung mechanischer Energie in elektrische Energie im Kraftfahrzeug verwendet werden. Üblicherweise werden dazu Klauenpolgeneratoren verwendet, welche meistens mit elektrischer Erregung ausgestattet sind. Da Klauenpolgeneratoren Drehstrom, meist dreiphasig, erzeugen, ist für die üblichen Kraftfahrzeug-Gleichspannungs-Bordnetze eine Gleichrichtung erforderlich. Dazu können Gleichrichter auf Basis von Halbleiterdioden oder Halbleiterschaltern verwendet werden.

Generatoren können auch zum Starten einer Brennkraftmaschine verwendet werden. Solche Generatoren werden auch als Startergenerator bezeichnet. Üblicherweise wird ein derartiger Startergenerator nur bei sehr kleinen Drehzahlen motorisch betrieben, da das erzeugbare Drehmoment über der Drehzahl schnell abnimmt. Denkbar sind jedoch auch größere elektrische Maschinen, die dann auch in einem Hybrid-Fahrzeug zum Antrieb des Fahrzeugs, zumindest aber zur Unterstützung der Brennkraftmaschine, verwendet werden können.

Grundlegende Möglichkeiten zur Bestimmung verschiedener Parameter, insbesondere optimaler Betriebspunkte, bei solchen elektrischen Maschinen, werden beispielsweise in DE 10 2015 117 813 A1, US 2014/0292240 A1, US 8,475,328 B2 und US 8 4110 737 B2 beschrieben, teilweise auch unter Verwendung der sog. d-q-Koordinaten.

Offenbarung der Erfindung

Erfindungsgemäß werden ein Verfahren zum Ermitteln eines maximal stellbaren Drehmoments einer elektrischen Maschine sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Ein erfindungsgemäßes Verfahren dient zum Ermitteln eines maximal stellbaren Drehmoments einer elektrischen Maschine, die vorzugsweise mittels eines Stromrichters bzw. Inverters angesteuert wird, in einem motorischen und/oder generatorischen Betrieb für einen aktuellen Betriebspunkt, und damit insbesondere auch in Echtzeit bzw. online. Als elektrische Maschine kommt dabei beispielsweise eine Klauenpolmaschine in Betracht. Hierbei werden nun eine aktuell maximal stellbare Spannung und eine aktuelle Kreisfrequenz der elektrischen Maschine ermittelt. Bei der maximal stellbaren Spannung kann es sich insbesondere um eine aktuell an einem Zwischenkreis anliegende Spannung handeln. Die Spannung kann hierzu insbesondere in sog. d-q-Koordinaten bzw. der Raumzeigerdarstellung angegeben sein, welche auch im Zusammenhang mit der sog. Vektorregelung verwendet werden. Die Kreisfrequenz entspricht dabei der Drehzahl der elektrischen Maschine.

Unter Verwendung eines maximal zulässigen Erregerstromes für die elektrische Maschine (hier wird der maximale Wert verwendet, da damit ein maximales Drehmoment erreichbar ist) werden dann iterativ Parameter der elektrischen Maschine und daraus unter Verwendung eines maximal zulässigen Phasenstromes sowie eines maximal zulässigen Gesamtstromes für den motorischen Betrieb und/oder den generatorischen Betrieb Größen umfassend einen maximal möglichen q-Strom und einen maximal möglichen d-Strom, jeweils für den motorischen und/oder den generatorischen Betrieb, ermittelt.

Unter solchen Parametern sind dabei insbesondere solche Parameter zu verstehen, die Einfluss auf die magnetische Sättigung der elektrischen Maschine haben. Bevorzugt kommen hierbei ein verketteter Fluss, insbesondere des Rotors, ggf. auch ein Streufluss und/oder wenigstens eine Induktivität der elektrischen Maschine in Betracht. Für den Fall, dass die elektrische Maschine keinen Vollpol-Läufer aufweist, wie dies beispielsweise bei einer Klauenpolmaschine der Fall ist, ist es zweckmäßig, als die wenigstens eine Induktivität eine q-Induktivität und eine d-Induktivität zu verwenden, da diese dann voneinander verschieden sind und die Differenz aufgrund des sog. Reluktanzmomentes einen Einfluss auf das maximal mögliche Drehmoment hat. Bevorzugt ist es, wenn dabei weiterhin eine aktuelle Temperatur der elektrischen Maschine verwendet bzw. berücksichtigt wird, da die Temperatur einen Einfluss auf den Widerstand des Stators der elektrischen Maschine hat.

Bei dieser iterativen Ermittlung der Parameter und der Größen wird dabei besonders bevorzugt mit Werten gleich Null für den q-Strom und den d-Strom gestartet, da die genauen Werte in der Regel nicht bekannt sind. Zudem kann dabei ein sog. Kipp-Moment der elektrischen Maschine berücksichtigt werden, um einen effizienten Betrieb der elektrischen Maschine sicherzustellen.

Der maximal zulässige Phasenstrom, der in d-q-Koordinaten angegeben werden kann, stellt dabei eine zu berücksichtigende Limitierung aufgrund des Inverters und der Wicklungen der elektrischen Maschine dar, in denen kein unendlich hoher Strom fließen kann. Der maximal zulässige Gesamtstrom für den motorischen Betrieb bzw. den generatorischen Betrieb stellt dabei den insgesamt maximal zulässigen Strom für die elektrische Maschine dar, der in der Regel vom Inverter begrenzt wird. Anzumerken ist an dieser Stelle, dass die Unterscheidung zwischen motorischem Betrieb und generatorischem Betrieb in der Regel nur über das Vorzeichen der zugehörigen Spannung und/oder der jeweiligen Größe selbst getroffen wird. Sofern hier jedoch von maximalen Werten die Rede ist, ist - sofern nicht explizit anders ausgeführt - von betragsmäßigen Werten auszugehen. In diesem Zusammenhang kann ein betragsmäßig maximaler Wert im generatorischen Betrieb auch ein - insgesamt gesehen - minimaler Wert sein.

Aus den Größen, also dem maximal möglichen q-Strom und dem maximal möglichen d-Strom, jeweils für den motorischen und/oder den generatorischen Betrieb, wird dann ein maximal mögliches Drehmoment der elektrischen Maschine für den motorischen und/oder den generatorischen Betrieb ermittelt, wobei zugehörige Werte dann über eine Schnittstelle bereitgestellt werden. Bei einer solchen Schnittstelle kann es sich beispielsweise um eine Bus-Schnittstelle, beispielsweise eine CAN-Bus-Schnittstelle, handeln. Die Ermittlung der Drehmomente kann dabei sehr einfach anhand der erwähnten Parameter und der ermittelten Werte für den q-Strom und d-Strom erfolgen.

Vorteilhafterweise wird dann basierend auf dem über die Schnittstelle bereitgestellten Wert eine Last eines Bordnetzes, in das die elektrische Maschine eingebunden ist, auf eine maximale generatorische Leistung der elektrischen Maschine begrenzt, und/oder es wird eine motorische Unterstützung der elektrischen Maschine insbesondere linear auf einen Stellweg eines Fahrpedals eines Fahrzeugs, in dem die elektrische Maschine verwendet wird, verteilt. Bei der Begrenzung der Last des Bordnetzes können Überlastungen vermieden werden, während jedoch zugleich immer die maximal mögliche Last ausgenutzt wird. Bei der Verteilung der generatorischen Leistung auf den Stellweg des Fahrpedals kann einem Fahrer ein gleichmäßiges Fahrgefühl, jedoch immer unter Ausnutzung der maximal möglichen Leistung der elektrischen Maschine, gegeben werden.

Für eine detailliertere Erläuterung des Verfahrens, insbesondere auch mit relevanten Formeln, sei an dieser Stelle auf die Figurenbeschreibung verwiesen.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnungen

Figur 1 zeigt schematisch eine elektrische Maschine, bei der ein erfindungsgemäßes Verfahren durchführbar ist.

Figuren 2 und 3 zeigen jeweils eine Stromortskurve für eine elektrische Maschine in d-q-Koordinaten.

Figuren 4 bis 6 zeigen jeweils einen Ablauf eines erfindungsgemäßen Verfahrens in verschiedenen bevorzugten Ausführungsformen.

Ausführungsform(en) der Erfindung

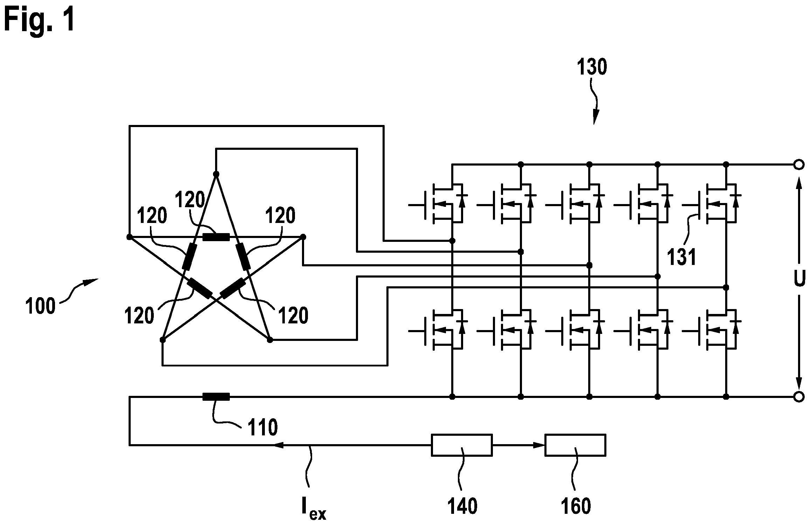

In Figur 1 ist schematisch und als Schaltbild eine elektrische Maschine, bei der ein erfindungsgemäßes Verfahren durchführbar ist, dargestellt. Die elektrische Maschine 100 ist hier beispielhaft als eine fremderregte, fünfphasige elektrische Maschine ausgebildet. Es versteht sich, dass auch eine andere Anzahl an Phasen, beispielsweise drei, verwendet werden kann. Die elektrische Maschine 100 kann zudem beispielsweise als Klauenpolmaschine ausgebildet sein.

Die elektrische Maschine 100 weist hierbei fünf Statorwicklungen 120 und eine Erreger- bzw. Läuferwicklung 110 auf. Über eine als Ansteuereinheit 140 ausgebildete Recheneinheit kann ein Erregerstrom $I_{ex}$ in der Erregerwicklung 110 eingestellt werden. Weiterhin ist eine Schaltungsanordnung 130 mit Schaltern 131, hier beispielhaft MOSFETS, von denen nur einer mit einem Bezugszeichen versehen ist, vorgesehen, mittels welcher eine Spannung U an die Statorwicklungen 120 angelegt oder abgegriffen werden kann, je nachdem ob die elektrische Maschine motorisch oder generatorisch betrieben wird.

Die Schalteranordnung 130 und die Steuereinheit 140 können auch jeweils Teil einer gemeinsamen Steuereinheit oder eines Inverters für die elektrische Maschine sein. Beim Betrieb der elektrischen Maschine können Größen oder Werte, insbesondere für ein maximal mögliches Drehmoment für den motorischen und/oder den generatorischen Betrieb, über eine Schnittstelle 160, beispielsweise eine CAN-Bus-Schnittstelle, bereitgestellt werden, sodass diese von anderen Steuergeräten oder dergleichen verwendet werden können.

Bei der Regelung von elektrischen Maschinen müssen physikalische Grenzen berücksichtigt werden, innerhalb derer der optimale Betriebspunkt eingeregelt wird. Eine einfache Darstellungsmöglichkeit für die Grenzen der Maschine stellt die sog. Stromortskurve dar.

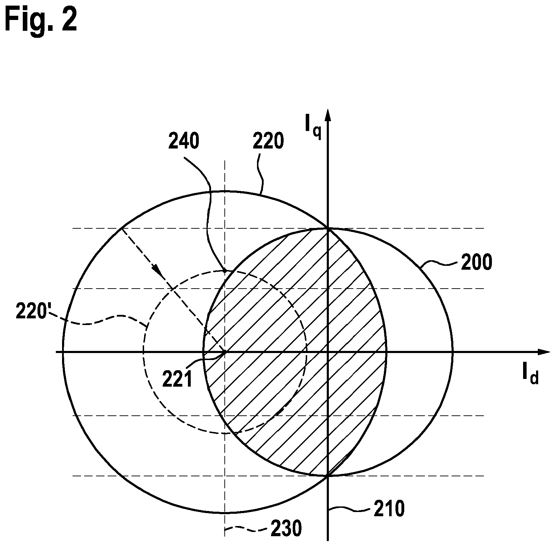

In Figur 2 ist eine solche Stromortskurve in einem d-q-Koordinatensystem, in dem $I_q$ über $I_d$, also die q-Werte und d-Werte des Phasenstroms gegeneinander aufgetragen sind, gezeigt, und zwar für eine elektrische Maschine mit Vollpolläufer, d.h. hier ist dementsprechend das Reluktanzmoment. zunächst vernachlässigt.

Hier und im Folgenden werden Ströme und Spannungen sowohl mit Kleinbuchstaben als auch mit Großbuchstaben bezeichnet.

Für Vollpolmaschinen ist das Drehmoment unabhängig vom d-Strom, sodass nach Gleichung (1), wie sie später noch erläutert wird, Linien mit konstantem Drehmoment ergibt, die parallel zur d-Achse verlaufen, hier gestrichelt eingezeichnet. (M: Drehmoment, $\psi_{Rotor}$: Rotorfluss)

$$i_q = \frac{M}{\psi_{Rotor}} \quad (1)$$

Da der Inverter und die Wicklungen der elektrischen Maschine keine unendlich hohen Ströme leiten können, dürfen die gestellten Ströme einen maximalen Wert nicht überschreiten, d.h. es gibt ein Limit für den d-q-Strom bzw. den Betrag des Phasenstroms in d-q-Koordinaten:

$$\left| i_{dq} \right| \leq i_{dq,Limit} \quad (2)$$

Diese Limitierung wird in Figur 1 durch den sog. Maximum-Ampere-Kreis 200 dargestellt. Die Linie, bei der sich das größte Drehmoment pro Ampere ergibt, wird Maximum-Torque-Per-Ampere-Linie (MTPA) genannt und befindet sich aufgrund der Zusammenhänge aus Formel (1) auf der q-Achse und ist mit 210 bezeichnet.

Eine weitere Limitierung stellt die maximal stellbare Spannung dar, die durch die am Zwischenkreis anliegende Spannung $U_{dc}$ begrenzt wird. Die maximale Spannung im d-q-Koordinatensystem wird im Blockbetrieb gestellt und kann mittels Gleichung (3) aus der Zwischenkreisspannung berechnet werden:

$$u_{dq,\lim it} = \frac{2 \cdot U_{dc}}{\pi} \quad (3)$$

Das Spannungslimit bewirkt, dass je nach Drehzahl nicht alle innerhalb des Maximum-Ampere-Kreises liegenden Ströme gestellt werden können. Unter Annahme des stationären Falls und unter Vernachlässigung des ohmschen Anteils ergibt sich:

$$\vec{u}_{dq} \approx j\omega_{el}\vec{\psi}_{dq,s} \quad (4)$$

$$\vec{\psi}_{dq,s} = \psi_{Rotor} + L_s \cdot \vec{i}_{dq} \quad (5)$$

Wobei aufgrund des Vollpols gilt: $L_s = L_d = L_q$. Damit ergibt sich aus der maximalen Spannung $u_{dq,Limit}$ die maximale Statorflussverkettung für eine gegebene Drehzahl $\omega_{el} = p \cdot \omega_{mech} = (p \cdot n)/(2\pi)$ :

$$\left| \psi_{dq,\max} \right| \approx \frac{u_{dq,Limit}}{\omega_{el}} \quad (6)$$

Durch Separieren von Gleichung (5) in den Imaginärteil und Realteil kann aus (6) eine Kreisgleichung für die Spannungsgrenze hergeleitet werden:

$$\left(\frac{\Psi_{dq,\max}}{L_s}\right)^2 = \left(\frac{u_{dq,Limit}}{\omega_{el} \cdot L_s}\right)^2 = \left(i_d + \frac{\Psi_{Rotor}}{L_s}\right)^2 + i_q^2 \quad (7)$$

Dieser Kreis hat den Ursprung bei ($\psi_{Rotor}/L_s$) und einen von der Spannung und der Drehzahl abhängigen Radius $u_{dq,Limit}/\omega_{el} \cdot L_s$) und wird Maximum-Flux-Kreis genannt und ist in Figur 2 mit 220 bezeichnet. Für steigende Drehzahlen wird dieser Kreis immer kleiner und nähert sich seinem Ursprung 221. Dies ist mittels einer gestrichelten Linie und einem kleineren Kreis 220' angedeutet.

Der zulässige Betriebsbereich ist dabei die Schnittmenge aus dem Maximum-Flux-Kreis und dem Maximum-Ampere-Kreis. Das bedeutet, bei höheren Drehzahlen wird der Stellbereich kleiner und die stellbaren Drehmomente verringern sich.

Die Drehzahl, bis zu der das maximale Drehmoment gestellt werden kann, wird Base Speed oder Grunddrehzahl genannt und kann aus der Bedingung $i_d = 0, i_q = i_{dq,Limit}$ und Gleichung (7) hergeleitet werden:

$$\omega_{el,base} = \frac{u_{dq,Limit}}{\sqrt{\left(\psi_{Rotor}\right)^2 + \left(L_s \cdot i_{dq}\right)^2}} \quad (8)$$

Für Geschwindigkeiten höher als die Grunddrehzahl liegt der optimale Betriebspunkt im Schnittpunkt aus Maximum-Ampere-Kreis und Maximum-Flux-Kreis. Wird die Drehzahl noch weiter erhöht, so kann es sein, dass der zulässige Bereich nur noch vom maximalen Statorfluss eingeschränkt wird. In diesem Fall liegt der optimale Betriebspunkt auf der sogenannten Maximum-Torque-per-Flux-Linie, in Figur 2 mit 230 bezeichnet, da dort der höchste q-Strom gestellt werden kann.

Zusätzlich zur Stromgrenze der einzelnen Phasen muss auch der Gesamt DC-Strom berücksichtigt werden. Dieser wird meist vom Inverter begrenzt und kann nach Gleichung (9) für eine fünfphasige Maschine berechnet werden:

$$I_{dc} = \frac{5}{2 \cdot U_{dc}} \operatorname{Re}\left\{u_{dq} i_{dq}^*\right\} = \frac{5}{2 \cdot U_{dc}} \left(u_d i_d + u_q i_q\right) \quad (9)$$

Da diese Gleichung sowohl von den Komponenten der Spannung als auch des Stroms abhängig ist, kann dieses Limit nur schwierig in Figur 2 übertragen werden, sodass diese Grenze gesondert betrachtet werden muss.

Sobald der Läufer der elektrischen Maschine nicht mehr als Vollpol angesehen werden kann, so wie es auch bei Klauenpolmaschinen der Fall ist, muss das Reluktanzmoment berücksichtigt werden. In diesem Fall sind die Induktivitäten in d-Richtung und q-Richtung unterschiedlich groß (d.h. $L_d \neq L_q$ mit i.d.R. $L_q > L_d$, d.h. einem positiven Reluktanzmoment) und das produzierte Drehmoment zeigt eine Abhängigkeit vom d-Strom:

$$M = i_q \psi_{Rotor} + (L_d - L_q) i_d i_q - \psi_\sigma i_d \quad (10)$$

$\psi_\sigma$ entspricht dabei einem Streufluss in q-Richtung, der durch die Permanentmagnete hervorgerufen wird und für Klauenpolmaschinen mit Permanentmagnet-Bestückung berücksichtigt werden muss.

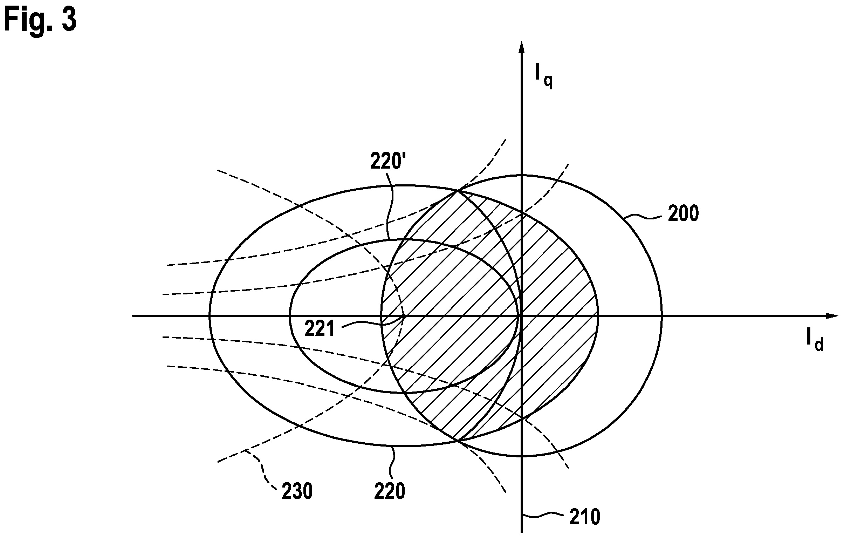

Damit sind die Linie mit konstantem Moment keine Parallelen zur d-Achse mehr, wie in Figur 3 gezeigt, die ansonsten die in Figur 2 gezeigten Größen entsprechend zeigt. Die Maximum-Torque-per-Amper-Linie 230 verläuft nicht mehr auf der q-Achse sondern weißt eine Abhängigkeit vom d-Strom auf und der Grunddrehzahlpunkt verschiebt sich entlang des Maximum-Ampere-Kreises 200 nach links.

Die Maximum-Torque-per-Amper-Linie lässt sich durch die Beziehung und Ableitung von (10) in Abhängigkeit von einem beliebigen Phasenstrom $i_{dq}$ herleiten:

$$i_d = \frac{-\psi_{Rotor}}{4 \cdot (L_d - L_q)} \pm \sqrt{\frac{i_{dq}^2}{2} + \left(\frac{\psi_{Rotor}}{4 \cdot (L_d - L_q)}\right)^2} \quad (11)$$

$$i_q = \sqrt{i_{dq}^2 - i_d^2} \quad (12)$$

Für die Spannung ergibt sich der folgende Zusammenhang (ohmscher Anteil vernachlässigt):

$$u_{dq} \approx j\omega_{el}\psi_{dq,s} \quad (13)$$

$$\vec{\psi}_{dq,s} = \psi_{Rotor} + L_d \cdot i_d + j \cdot L_q i_q \quad (14)$$

Damit kann analog zum Vollpol-Läufer das Spannungslimit hergeleitet werden für $L_s = L_d$:

$$\left(\frac{\psi_{dq,\max}}{L_d}\right)^2 = \left(\frac{u_{dq,Limit}}{\omega_{el} \cdot L_d}\right)^2 = (i_d + \frac{\psi_{Rotor}}{L_d})^2 + i_q^2 \cdot \left(\frac{L_q}{L_d}\right)^2 \quad (15)$$

Somit ergibt sich für den Fall des Klauenpols ein Spannungslimit, welches ellipsenförmig verläuft, wie durch 220 bzw. 220' in Figur 3 zu sehen ist.

Die Maximum-Torqe-per-Flux-Linie 230 kann durch Ableiten von (10) und unter Verwendung von Formel (15) gewonnen werden:

$$i_q = \sqrt{\left(\frac{u_{dq,Limit}}{\omega_{el} \cdot L_q}\right)^2 - (\frac{i_d L_d}{L_q} + \frac{\psi_{Rotor}}{L_q})^2} \quad (16)$$

$$i_d = -\frac{3 \cdot \psi_{Rotor}}{4 \cdot L_d} + \frac{\psi_{Rotor}}{4 \cdot (L_q - L_d)} - \sqrt{\left(\frac{u_{dq,Limit}}{\omega_{el} \cdot L_d}\right)^2 \cdot \frac{1}{2} + \left(\frac{\psi_{Rotor}}{4 \cdot (L_q - L_d)} + \frac{\psi_{Rotor}}{4 \cdot L_d}\right)^2}$$

$$(17)$$

Auch dieser Verlauf stellt keine Gerade mehr da, sondern knickt in negativer d-Richtung ab. In der Figur scheinen positive und negative Maximalmomente gleich groß zu sein. Der Unterschied ergibt sich erst durch Berücksichtigung des ohmschen Widerstands.

Im Folgenden soll das Konzept für die Bestimmung der einzelnen Grenzen für vorliegendes Verfahren herleitet werden.

Wenn das Maximum-Flux-Limit so groß ist, dass alle Punkte auf der Maximum-Torque-per-Ampere-Linie gestellt werden können, ist der Maximum-Ampere-Kreis begrenzend und das maximale bzw. minimale Drehmoment ergibt sich durch den Schnittpunkt aus Maximum-Ampere-Kreis und Maximum-Torque-per-Ampere-Linie. Eine Gleichung für diesen Fall lässt sich mit und Formel (11) bzw. (12) herleiten.

$$i_d = \frac{-\psi_{Rotor}}{4 \cdot (L_d - L_q)} \pm \sqrt{\frac{i_{dq,Limit}^2}{2} + \left(\frac{\psi_{Rotor}}{4 \cdot (L_d - L_q)}\right)^2} \quad (18)$$

$$i_q = \sqrt{i_{dq,Limit}^2 - i_d^2} \quad (19)$$

Diese Formel gilt für den idealen Fall. In der Realität sind allerdings die Parameter $L_d, L_q, \psi_{Rotor}$ ebenfalls abhängig von den Strömen:

$$L_d = f(i_d, i_q, i_{ex}), L_q = f(i_d, i_q, i_{ex}), \psi_{Rotor} = f(i_{ex}, i_q, i_d) \quad (20)$$

Die Abhängigkeit von den Strömen kann über ein iteratives Verfahren abgebildet werden. Daher werden die Gleichungen zunächst ohne diese Abhängigkeit hergeleitet.

Sobald die Maximum-Flux-Ellipse die Maximum-Torque-per-Ampere-Linie schneidet, liegt der optimale Betriebspunkt auf dem Schnittpunkt von Maximum-Flux-Ellipse mit dem Maximum-Ampere-Kreis. Die Werte für $i_d, i_q$ können in diesem Fall aus Gleichung (15) mit $i_q = \sqrt{i_{dq,Limit}^2 - i_d^2}$ hergeleitet werden:

$$i_d = \frac{-\psi_{Rotor} L_d}{2 \cdot (L_d^2 - L_q^2)} \pm \sqrt{\frac{i_{dq,Limit}^2 L_q^2}{L_d^2 - L_q^2} - \frac{U_{dq}^2}{w_{el}^2 (L_d^2 - L_q^2)} + \frac{\psi_{Rotor}^2 L_d^2}{4 \cdot (L_d^2 - L_q^2)} + \frac{\psi_{Rotor}^2}{L_d^2 - L_q^2}} \quad (21)$$

$$i_q = \sqrt{i_{dq,Limit}^2 - i_d^2} \quad (22)$$

Da diese Gleichung unter Vernachlässigung des Strangwiderstands hergeleitet wurde und diese Vernachlässigung im Maximalpunkt bei maximalem Strom und kleinen Spannungen (z.B. U = 24 V, $R_s$ = 0,02 Ω, $i_{dq,Limit}$=280 A) sehr ungenau wird, muss eine Gleichung mit Berücksichtigung des Phasenwiderstands hergeleitet werden. Dazu wird von den Spannungsgleichungen ausgegangen:

$$u_d = R_s i_d - \omega_{el} L_q i_q - \omega_{el} \psi_\sigma \quad (23)$$

$$u_q = R_s i_q + \omega_{el} (L_d i_d + \psi_{Rotor}) \quad (24)$$

$$u_{dq}^2 = (u_d^2 + u_q^2) \quad (25)$$

$\psi_\sigma$ entspricht dabei einem Streufluss in q-Richtung, der durch die Permanentmagnete im Klauenpolläufer hervorgerufen wird

Einsetzen von (23) und (24) in (25) ergibt:

$$\begin{aligned} 0 = {} & i_d^2 \cdot \omega_{el}^2 (L_d^2 - L_q^2) + i_d(-2 R_s \omega_{el} \Psi_\sigma + 2\omega_{el}^2 L_d \psi_{Rotor}) \\ & + I_q(2 \cdot R_s \omega_{el}(\psi_{Rotor} + I_d(L_d - L_q)) + 2\omega_{el}^2 \psi_\sigma L_q) \\ & - u_{dq,Limit}^2 + i_{dq,Limit}^2 (R_s^2 + \omega_{el}^2 L_q^2) - \omega_{el}^2 (\psi_{Rotor}^2 + \psi_\sigma^2) \end{aligned} \quad (26)$$

Einsetzen von Gleichung (22) würde zu einer Gleichung vierten Grades für $i_d$ führen, die nur schwierig gelöst werden kann. Da aufgrund der Abhängigkeit der Parameter von den Phasenströmen (20) ein iteratives Lösungsverfahren verwendet wird, kann die Näherung getroffen werden, dass sich $i_d$ im Maximalpunkt von einem Rechenschritt zum nächsten nur um einen sehr kleinen Wert ändert, sodass (22) durch eine Taylor-Approximation erster Ordnung approximiert werden kann:

EP 3 685 503 B1

$$i_q = \pm \underbrace{\sqrt{i_{dq,Limit}^2 - i_{d,last}^2}}_{T_1} - \underbrace{\frac{\pm i_{d,last}}{\sqrt{i_{dq,Limit}^2 - i_{d,last}^2}}}_{T_1'}(i_d - i_{d,last}) \quad (27)$$

$i_{d,last}$ beschreibt dabei den Wert von $i_d$ im letzten Iterationsschritt.

Wobei das positive Vorzeichen im motorischen Betrieb und das negative Vorzeichen im generatorischen Betrieb verwendet wird. Einsetzen von (27) in (26) und lösen für $i_d$ führt schließlich zu:

$$i_d = -\frac{\omega_{el}^2 L_d \Psi_{Rotor} - R_s \omega_{el} \psi_\sigma - T_1 \omega_{el} R_s (L_q - L_d)}{\omega_{el}^2 (L_d^2 - L_q^2) - T_1' 2 R_s \omega_{el}(L_q - L_d)}$$

$$\pm \sqrt{\left( \frac{\begin{array}{c}\omega_{el}^2 L_d \Psi_{Rotor} - R_s \omega_{el} \psi_\sigma - T_1 \omega_{el} R_s (L_q - L_d) \\ + T_1'(i_{d,last} R_s \omega_{el}(L_q - L_d) + R_s \omega_{el}\psi_R + \omega_{el}^2 \psi_\sigma L_q)\end{array}}{\omega_{el}^2 (L_d^2 - L_q^2) - T_1' 2 R_s \omega_{el}(L_q - L_d)} \right)^2 - \frac{\begin{array}{c}-u_{dq,Limit}^2 + i_{dq,Limit}^2 (R_s^2 + \omega_{el}^2 L_q^2) + \omega_{el}^2 (\psi_{Rotor}^2 + \psi_\sigma^2) \\ + 2\cdot(T_1 - T_1'\cdot i_{d,last})\cdot(R_s \omega_{el}\psi_{Rotor} + \omega_{el}^2 \psi_\sigma L_q)\end{array}}{\omega_{el}^2 (L_d^2 - L_q^2) - T_1' 2 R_s \omega_{el}(L_q - L_q)}} \quad (28)$$

Diese Gleichung beschreibt den Schnittpunkt des Maximum-Ampere-Kreises mit der Maximum-Flux-Ellipse für eine vorgegebene Spannung $u_{dq,Limit}$ und einen vorgegeben Maximalstrom bzw. maximal zulässigen Phasenstrom $i_{dq,Limit}$. Der Wert für $i_q$ ergibt sich nach (22).

Alternativ zum Lösen der Gleichung, kann der Ansatz verfolgt werden, sich direkt iterativ an eine Lösung anzunähern und auf die Randbedingung zu prüfen. Die Idee dahinter ist folgende:

Startet man auf dem Maximum-Ampere-Kreis im Punkt ($i_d = 0$, $i_q = i_{dq,Limit}$) und läuft auf dem Maximum-Ampere-Kreis entlang ($i_d$ dekrementieren, mit $iq = \sqrt{i_{dq,Limit}^2 - i_d^2}$ ), so gelangt man zwangsläufig auf den Schnittpunkt des Maximum-Ampere-Kreises mit der Maximum-Flux-Ellipse. Die Bedingung, mit welcher überprüft werden kann, ob es sich um einen zulässigen Betriebspunkt handelt, lautet:

$$u_d = R_s i_d - \omega_{el} L_q i_q - \omega_{el}\psi_\sigma \quad (29)$$

$$u_q = R_s i_q + \omega_{el}(L_d i_d + \psi_{Rotor}) \quad (30)$$

$$u_{dq} = \sqrt{u_d^2 + u_q^2} \overset{!}{\leq} u_{dq,Limit} \quad (31)$$

Befindet man sich außerhalb des Schnittpunkts, so ist $u_d > U_{dq,Limit}$ und $i_d$ muss verringert werden. Befindet man sich innerhalb des Schnittpunkts so gilt $u_d < u_{dq,Limit}$ und $i_d$ muss erhöht werden. Dies eignet sich hervorragend für einen Regler bzw. eine Regelung mit der Zielgröße $u_d = U_{dq,Limit}$. Vorzugsweise kann hierzu ein PI-Regler verwendet werden.

Um einen effizienten Betrieb der elektrischen Maschine sicher zu stellen, darf das sogenannte Kipp-Moment

8

(bzw. der Kipp-Punkt oder Kipp-Winkel) der elektrischen Maschine nicht überschritten werden. Der Kipp-Punkt ist derjenige Punkt in der Stromortskurve, bei dem trotz Erhöhung des Phasenstroms durch entlanglaufen der Maximum-Flux-Ellipse ein kleineres Moment resultiert. In der vereinfachten Stromortskurve nach Figur 2 entspricht dieser Punkt dem Scheitelpunkt des Maximum-Flux-Kreises und ist mit 240 bezeichnet.

Für die Abschätzung des minimal bzw. maximal stellbaren Drehmoments (dabei entspricht das minimal stellbare Drehmoment im generatorischen Betrieb einem betragsmäßig maximalen Drehmoment) werden der Kipp-Winkel bzw. die Spannungen $u_d$, $u_q$ und die maximale Amplitude des Stromvektors im Kipp-Punkt benötigt. Um eine Gleichung für die Kipp-Punkt-Spannung $u_q$ herzuleiten, kann der DC-Strom betrachtet werden:

$$I_{dc} = \frac{5}{2} \mathrm{Re} \left\{ u_{dq} i_{dq}^{*} \right\} \approx \frac{5}{2} \left( u_d i_d + u_q i_q \right) \quad (32)$$

Der Kipp-Punkt lässt sich für eine feste Drehzahl durch das Maximum des DC-Stroms bestimmen. Um das Maximum zu suchen, werden zunächst die Ströme $i_d$, $i_q$ aus den Gleichungen eliminiert. Dazu werden die Spannungsgleichungen (29) und (30) nach $i_d$, $i_q$ umgestellt:

$$i_q = \frac{-\omega_{el} \cdot L_d \cdot u_d - \omega_{el}^2 \psi_\sigma L_d + u_q R_s - R_s \cdot \omega_{el} \cdot \psi_{Rotor}}{R_s^2 + \omega^2 \cdot L_d \cdot L_q} \quad (33)$$

$$i_d = \frac{u_q \omega_{el} L_q + R_s \cdot u_d + R_s \omega_{el} \psi_\sigma - \omega_{el}^2 \cdot L_q \cdot \psi_{Rotor}}{R_s^2 + \omega_{el}^2 \cdot L_d \cdot L_q} \quad (34)$$

Werden diese Gleichungen in (32) eingesetzt, so erhält man den DC-Strom in Abhängigkeit von den Spannungen.

$$I_{dc} = \frac{5}{2 U_{dc} \left( R_s^2 + \omega_{el}^2 \cdot L_d \cdot L_q \right)} \left( R_s u_{dq}^2 + u_d \left( -\omega_{el}^2 L_q \psi_{Rotor} + \omega_{el} \psi_\sigma R_s \right) \right.$$
$$\left. + u_d u_q \omega_{el} \left( L_q - L_d \right) + u_q \left( -R_s \omega_{el} \psi_{Rotor} - \omega_{el}^2 L_d \psi_\sigma \right) \right) \quad (35)$$

Die Spannung $u_d$ kann auch hier aufgrund der iterativen Berechnung durch ein Taylor-Polynom erster Ordnung angenähert werden. $u_{q,last}$ beschreibt dabei den Wert von $u_q$ im letzten Iterationsschritt.

$$u_d = \underbrace{\mp \sqrt{u_{dq,Limit}^2 - u_{q,last}^2}}_{T_{1u}} - \underbrace{\frac{\mp u_{q,last}}{\sqrt{u_{dq,Limit}^2 - u_{q,last}^2}}}_{T_{1u}'} \left( u_q - u_{q,last} \right) \quad (36)$$

Dabei wird das negative Vorzeichen im motorischen Betrieb und das positive Vorzeichen im generatorischen Betrieb verwendet. Durch Ableiten des DC-Stroms nach $u_d$ und gleich Null setzen kann schließlich $u_{d,Kipp}$ berechnet werden:

$$\frac{dI_{dc}}{du_q} = 0 \quad (37)$$

$$u_{q,kipp} = \frac{\omega_{el}^2 L_q \psi_{Rotor} - \omega_{el} \psi_\sigma R_s - T_{1u}'(R_s \omega_{el} \psi_{Rotor} + \omega_{el}^2 L_d \psi_\sigma)}{4\omega_{el}(L_q - L_d)}$$

$$\pm \sqrt{\left(\frac{-\omega_{el}^2 L_q \psi_{Rotor} + \omega_{el} \psi_\sigma R_s + T_{1u}'(R_s \omega_{el} \psi_{Rotor} + \omega_{el}^2 L_d \psi_\sigma)}{4\omega_{el}(L_q - L_d)}\right)^2 - \frac{T_{1u}'(R_s \omega_{el} \psi_{Rotor} + \omega_{el}^2 \psi_\sigma L_d) - T_{1u}' u_{q,last}(R_s \omega_{el} \psi_{Rotor} + \omega_{el}^2 L_d \psi_\sigma)}{2\omega_{el}(L_q - L_d)} + \frac{u_{dq,Limit}^2}{2}} \quad (38)$$

$$u_{d,kipp} = -\sqrt{u_{dq,Limit}^2 - u_{q,kipp}^2}, u_q = u_{q,kipp} \quad (39)$$

für den motorischen Betrieb und im generatorischen Betrieb entsprechend.

$$u_{d,kipp} = \sqrt{u_{dq,Limit}^2 - u_{q,kipp}^2}, u_q = u_{q,kipp}$$

Ist die Drehzahl so hoch oder die Spannung so klein, dass dieser Punkt erreicht wird, so muss auf der Maximum-Torque-per-Flux-Linie weitergelaufen werden. Der maximale Stromvektor lässt sich berechnen, indem die Werte für $u_{d,kipp}$ und $u_{q,kipp}$ in die Gleichungen (33) und (34) eingesetzt werden.

Bei allen aus den vorgehend hergeleiteten Betriebspunkten muss zusätzlich sichergestellt werden, dass das jeweilige Stromlimit nicht überschritten wird. Der DC-Strom im jeweiligen Betriebspunkt kann durch folgende Gleichung berechnet werden:

$$I_{dc} = \frac{5}{2} \mathrm{Re}\left\{u_{dq} i_{dq}^*\right\} \quad (40)$$

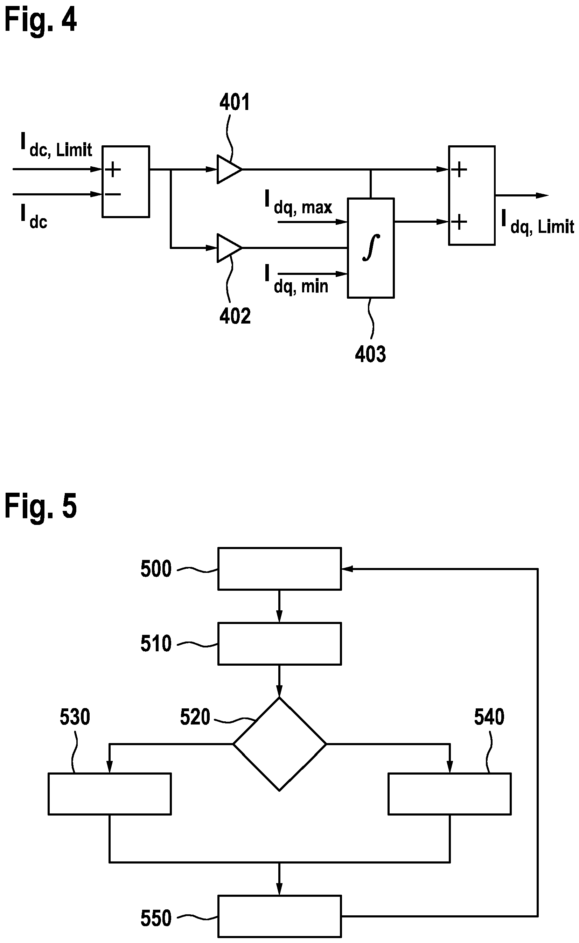

Die Einhaltung des DC-Stromlimits $I_{dc,Limit}$ kann durch einen Regler bewerkstelligt werden, wie in Figur 4 veranschaulicht ist. Der Regler umfasst hier einen P-Anteil 401 und einen I-Anteil 402 mit Integrator 403. Der Regler verringert bei einem Überschreiten von $I_{dc,Limit}$ den maximalen d-q-Stromvektor $I_{dq,Limit}$.

Mit dem neuen verringerten d-q-Stromvektor wird anschließend im nächsten Iterationsschritt der Maximalpunkt erneut ausgerechnet und mit dem DC-Stromlimit verglichen, bis sich ein Wert einstellt, der dem Limit entspricht. Ist der DC-Strom kleiner als das vorgegebene Limit, so wird der q.d-Stromvektor wieder bis auf den maximal erlaubten Stromvektor erhöht. Dieser ist in der Regel ein Parameter des Inverters, hier mit $I_{dq,max}$ bezeichnet. Ebenso gibt es einen minimalen Stromvektor $I_{dq,min}$.

Die Gleichung (32) für $I_{dc}$ kann durch die Berücksichtigung von Inverter und Maschinenverlusten erweitert werden, um die Genauigkeit zu erhöhen.

In Figur 5 ist ein Teil eines Ablaufs eines erfindungsgemäßen Verfahrens in einer bevorzugten Ausführungsform gezeigt nämlich eine Minimum-Maximum-Prädiktion zur Ermittlung eines minimalen bzw. maximalen Stroms. Dabei wird ein Ablauf des Algorithmus wie vorgehend beschrieben, nochmals erläutert. In einem ersten Schritt 500 werden die Kippspannungen gemäß Gleichungen (38), (39) im jeweiligen Betriebspunkt bestimmt.

Aus diesen Spannungen kann der maximal Stellbare $I_{dq}$-Stromvektor ermittelt werden, indem die Kippspannungen in Gleichung (33) und (34) eingesetzt werden und der Betrag von $I_{dq}$ berechnet wird. Dieser Stromvektor wird mit dem letzten Wert des $I_{dq}$-Limits aus der DC-Stromlimit-Berechnung gemäß Figur 4 verglichen und das Minimum der beiden Limits gewählt, um daraus in Schritt 510 den Stromvektor $i_{d,Voltage}$, $i_{q,Voltage}$ zu berechnen, der sich aus dem Schnittpunkt der Maximum-Flux-Kurve mit der Maximum-Ampere-Kurve ergibt (Gleichungen (27) und (28)).

Ist der ermittelte Wert $i_{d,Voltage}$ in Schritt 520 kleiner als ein gemäß Gleichung (18) errechneter Wert so befindet sich die elektrische Maschine oberhalb der Grunddrehzahl an der Spannungsgrenze und der Wert $i_{d,Voltage}$, $i_{q,Voltage}$ wird gemäß Schritt 530 für die weitere Berechnung verwendet.

Ist dies nicht der Fall, so befindet sich die Maschine in der d-q-Stromlimit-Grenze (Schnittpunkt aus Maximum-Ampere-Kreis und Maximum-Torque-per-Ampere-Linie) und der optimale Wert für $I_d$ gemäß Gleichung (18) sowie der maximale Wert für $I_q$ (Abhängig von $I_{dq,Limit}$) kann gemäß Schritt 540 verwendet werden.

Aus den berechneten Strömen wird schließlich in Schritt 550 der DC-Strom bestimmt und mit einem PI-Regler eingeregelt. Ist der berechnete DC-Strom kleiner als maximal erlaubt, so wird der d-q-Stromvektor bis auf den maximalen d-q-Phasenstromwert erhöht. Wird der DC-Strom überschritten, so wird der d-q-Stromvektor heruntergeregelt und im nächsten Iterationsschritt mit dem neuen Stromvektor die Ströme berechnet, sodass sich der gewünschte DC-Strom einpendelt (falls die elektrische Maschine nicht durch den Stromvektor $i_{dq,max}$ begrenzt wird).

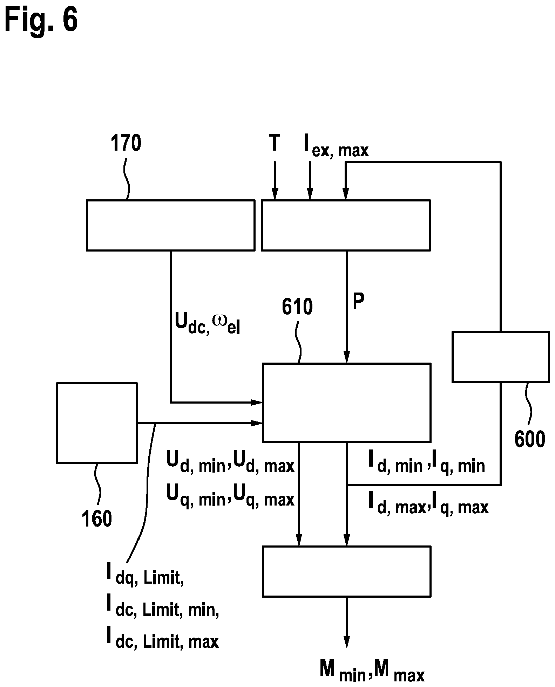

In Figur 6 ist nun ein Ablauf eines erfindungsgemäßen Verfahrens in einer weiteren bevorzugten Ausführungsform gezeigt. Um die Sättigungsabhängigkeit der Parameter P (wie oben erläutert) zu berücksichtigen, wird ein iterativer Ansatz, wie durch den Block 600 angedeutet, verwendet.

Die gesamte Berechnung kann beispielsweise im 500 μs-Task ablaufen, d.h. der gesamte Rechenzweig wird einmal alle 500 μs durchlaufen. Da die Rechenzeit deutlich schneller als Drehzahländerungen (max. 40000/min) oder Spannungsänderungen (200 V/s) ist, kann für jeden Betriebsfall vom eingeschwungenen Zustand ausgegangen werden.

Die DC-Spannung $U_{dc}$ und die elektrische Kreisfrequenz $\omega_{el}$ werden gemessen, beispielsweise mittels eines Sensors 170, und der Minimum-Maximum-Prädiktion 610, wie sie in Bezug auf Figur 5 erläutert wurde, zur Verfügung gestellt. Im Initialzustand werden für den Maximal- und Minimal-Punkt jeweils die Parameter mit $I_d=0$ und $I_q=0$ berechnet.

Der Erregerstrom wird immer auf den maximal zulässigen Wert $I_{ex,max}$ gesetzt, da mit diesem Wert immer das größte Drehmoment erreicht wird. Die Parameter werden anschließend über ein Polynom berechnet, welches über Messungen gefittet wurde z. B.:

$$\psi_q(i_\mu, i_q) = (a_0 + a_1 \cdot i_\mu + a_2 \cdot i_\mu^2) \cdot i_q + (a_3 + a_4 \cdot i_\mu + a_5 \cdot i_\mu^2) \cdot i_q^3 = L_q \cdot i_q$$

$$\psi_d(i_\mu, i_d, i_q) = \underbrace{(a_{d0} + a_{d1} \cdot I_q^2 + a_{d2} \cdot I_q^4)}_{\psi_{PM}}$$
$$+ \underbrace{(a_{d3} + a_{d4} \cdot I_q^2 + a_{d5} \cdot I_q^4) \cdot i_\mu + a_{d6} \cdot I_\mu^2 + a_{d7} \cdot I_\mu^3}_{M_{dE} \cdot I_\mu} + \underbrace{a_{d8} \cdot I_d}_{L_{d\sigma} \cdot I_d}$$

$$L_d(i_\mu, i_q) = M_{dE} + L_{do}$$

$$\psi_R(i_\mu, i_q) = M_{dE} \cdot I_{ex}$$

mit dem Magnetisierungsstrom $i_\mu = k_{sr} I_{ex} + I_d$, wobei $k_{sr}$ den Stator-Rotor-Übertragungsfaktor angibt.

Aus den Parametern werden anschließend zusammen mit dem d-q-Stromlimit $I_{dq\_Limit}$ und der generatorischen DC-Strom-Grenze $I_{dcLimit\_min}$ sowie der motorischen DC-Stromgrenze $I_{dc\_Limit\_max}$ die Ströme in dem motorischen und generatorischen Betrieb gemäß Figur 5 bestimmt. Ein Unterschied zwischen der Berechnung für den motorischen und den generatorischen Berechnungen ist dabei nur der Wertebereich für die zulässige Spannung (motorisch $U_q>0$, generatorisch $U_q<0$).

Aus den berechneten Spannungen und Strömen werden schließlich die Grenzen für das stellbare Drehmoment $M_{max}$ und $M_{min}$ berechnet, zum Beispiel aus der Gleichung:

$$M = \frac{p \cdot z}{2}(i_q \psi_{Rotor} + (L_d - L_q)i_d i_q) = \frac{p \cdot z}{2}(i_q \psi_d - \psi_q i_d)$$

wobei mit p und z die Polzahl der elektrischen Maschine festgelegt wird.

Auf diese Weise kann also ein maximal stellbares Drehmoment im motorischen Betrieb bzw. generatorischen Betrieb (dann auch als minimales Drehmoment bezeichnet) in Echtzeit bzw. online ermittelt und dann über die Schnittstelle für andere Anwendungen zur Verfügung gestellt werden.

**Patentansprüche**

1. Verfahren zum Ermitteln eines maximal stellbaren Drehmoments ($M_{min}$, $M_{max}$) einer elektrischen Maschine (100) in einem motorischen und/oder generatorischen Betrieb für einen aktuellen Betriebspunkt,

   wobei eine aktuell maximal stellbare Spannung ($U_{dc}$) und eine aktuelle Kreisfrequenz ($\omega_{el}$) der elektrischen

Maschine (100) ermittelt werden,

**dadurch gekennzeichnet, dass** unter Verwendung eines maximal zulässigen Erregerstromes ($I_{ex,max}$) für die elektrische Maschine (100) Parameter (P) der elektrischen Maschine und daraus unter Verwendung eines maximal zulässigen Phasenstromes ($I_{dq,Limit}$) sowie eines maximal zulässigen Gesamtstromes ($I_{dc,Limit}$) für den motorischen Betrieb und/oder den generatorischen Betrieb Größen umfassend einen maximal möglichen q-Strom ($I_{q,min}$, $I_{q,max}$) und einen maximal möglichen d-Strom ($I_{d,min}$, $I_{d,max}$), jeweils für den motorischen und/oder den generatorischen Betrieb, iterativ ermittelt werden,

wobei aus den Größen ein maximal mögliches Drehmoment ($M_{min}$, $M_{max}$) der elektrischen Maschine für den motorischen und/oder den generatorischen Betrieb ermittelt werden, und

wobei ein ermittelter Wert für das maximal mögliche Drehmoment für den motorischen und/oder den generatorischen Betrieb über eine Schnittstelle (160) bereitgestellt werden.

2. Verfahren nach Anspruch 1, wobei als Parameter (P) der elektrischen Maschine ein verketteter Fluss und/oder wenigstens eine Induktivität der elektrischen Maschine verwendet werden.

3. Verfahren nach Anspruch 2, wobei als die wenigstens eine Induktivität eine q-Induktivität ($L_q$) und eine d-Induktivität ($L_d$) verwendet werden.

4. Verfahren nach einem der vorstehenden Ansprüche, wobei für die iterative Ermittlung der Parameter (P) und der Größen weiterhin eine aktuelle Temperatur (T) der elektrischen Maschine verwendet wird.

5. Verfahren nach einem der vorstehenden Ansprüche, wobei für die iterative Ermittlung der Parameter (P) und der Größen mit Werten gleich Null für den q-Strom und den d-Strom gestartet wird.

6. Verfahren nach einem der vorstehenden Ansprüche, wobei bei der Ermittlung der Größen aus den Parametern (P) ein Kipp-Moment (240) der elektrischen Maschine berücksichtigt wird.

7. Verfahren nach einem der vorstehenden Ansprüche, wobei basierend auf dem über die Schnittstelle (160) bereitgestellten Wert eine Last eines Bordnetzes, in das die elektrische Maschine (100) eingebunden ist, auf eine maximale generatorische Leistung der elektrischen Maschine (100) begrenzt wird, und/oder eine motorische Unterstützung der elektrischen Maschine (100) insbesondere linear auf eine Fahrpedalstellung eines Fahrzeugs, in dem die elektrische Maschine (100) verwendet wird, verteilt wird.

8. Recheneinheit (140), die dazu eingerichtet ist, ein Verfahren nach einem der vorstehenden Ansprüche durchzuführen.

9. Computerprogramm, das eine Recheneinheit (140) dazu veranlasst, ein Verfahren nach einem der Ansprüche 1 bis 7 durchzuführen, wenn es auf der Recheneinheit (140) ausgeführt wird.

10. Maschinenlesbares Speichermedium mit einem darauf gespeicherten Computerprogramm nach Anspruch 9.

**Claims**

1. Method for determining a maximum settable torque ($M_{min}$, $M_{max}$) of an electrical machine (100) in a motor and/or generator operation for a current operating point,

wherein a current maximum settable voltage ($U_{dc}$) and a current angular frequency ($\omega_{el}$) of the electrical machine (100) are determined,

**characterised in that**, using a maximum permissible excitation current ($I_{ex,max}$) for the electrical machine (100), parameters (P) of the electrical machine and, from this, using a maximum permissible phase current ($I_{dq,Limit}$) and a maximum permissible total current ($I_{dc,Limit}$) for the motor operation and/or the generator operation, variables comprising a maximum possible q-current ($I_{q,min}$, $I_{q,max}$) and a maximum possible d-current ($I_{d,min}$, $I_{d,max}$), in each case for the motor operation and/or the generator operation, are determined iteratively,

a maximum possible torque ($M_{min}$, $M_{max}$) of the electrical machine for motor and/or generator operation being determined from the variables, and

a determined value for the maximum possible torque for motor and/or generator operation being made available via an interface (160).

**2.** Method according to claim 1, wherein a chained flux and/or at least one inductance of the electrical machine is used as parameter (P) of the electrical machine.

**3.** Method according to claim 2, wherein as said at least one inductance a q-inductance ($L_q$) and a d-inductance ($L_d$) are used.

**4.** Method according to any one of the preceding claims, wherein a current temperature (T) of the electrical machine is further used for the iterative determination of the parameters (P) and the variables.

**5.** Method according to any one of the preceding claims, wherein the iterative determination of the parameters (P) and the variables is started with values equal to zero for the q-current and the d-current.

**6.** Method according to any one of the preceding claims, wherein an overturn torque (240) of the electric machine is taken into account for the determination of the variables from the parameters (P).

**7.** Method according to any one of the preceding claims, wherein, based on the value provided via the interface (160), a load of an on-board network in which the electric machine (100) is integrated is limited to a maximum regenerative power of the electric machine (100), and/or a motor assistance of the electric machine (100) is distributed, in particular linearly, to an accelerator pedal position of a vehicle in which the electric machine (100) is used.

**8.** Computing unit (140) adapted to perform a method according to any one of the preceding claims.

**9.** Computer program that causes a computing unit (140) to perform a method according to any one of claims 1 to 7 when executed on the computing unit (140).

**10.** Machine-readable storage medium having a computer program stored thereon according to claim 9.

**Revendications**

**1.** Procédé pour déterminer un couple réglable maximal (Mmin, Mmax) d'une machine électrique (100) dans un mode moteur et/ou générateur pour un point de fonctionnement actuel,

dans lequel une tension réglable maximale actuelle ($U_{dc}$) et une fréquence angulaire actuelle ($\omega_{el}$) de la machine électrique (100) sont déterminées, **caractérisé en ce que** des paramètres (P) de la machine électrique sont déterminés de manière itérative en utilisant un courant d'excitation maximal admissible (Iexmax) pour la machine électrique (100), et à partir de là, des grandeurs incluant un courant q maximal possible ($I_{q,min}$, $I_{q,max}$) et un courant d maximal possible ($I_{d,min}$, $I_{d,max}$) sont respectivement déterminées de manière itérative pour le mode moteur et/ou le mode générateur, en utilisant un courant de phase maximal admissible ($I_{dq,Limit}$) ainsi qu'un courant total maximal admissible ($I_{dc,Limit}$) pour le mode moteur et/ou le mode générateur, dans lequel un couple maximal possible ($M_{min}$, $M_{max}$) de la machine électrique est déterminé à partir des grandeurs pour le mode moteur et/ou le mode générateur, et dans lequel une valeur déterminée pour le couple maximal possible est fournie par l'intermédiaire d'une interface (160) pour le mode moteur et/ou le mode générateur.

**2.** Procédé selon la revendication 1, dans lequel un flux enchaîné et/ou au moins une inductance de la machine électrique sont utilisés comme paramètres (P) de la machine électrique.

**3.** Procédé selon la revendication 2, dans lequel une inductance q ($L_q$) et une inductance d ($L_d$) sont utilisées comme la au moins une inductance.

**4.** Procédé selon l'une des revendications précédentes, dans lequel une température actuelle (T) de la machine électrique est en outre utilisée pour la détermination par itération des paramètres (P) et des grandeurs.

**5.** Procédé selon l'une des revendications précédentes, dans lequel pour la détermination par itération des paramètres (P) et des grandeurs, des valeurs initiales égales à zéro sont utilisées pour le courant q et le courant d.

**6.** Procédé selon l'une des revendications précédentes, dans lequel un couple de décrochage (240) de la machine électrique est pris en compte pour la détermination des grandeurs à partir des paramètres (P).

7. Procédé selon l'une des revendications précédentes, dans lequel sur la base de la valeur fournie par l'intermédiaire de l'interface (160), une charge d'un réseau de bord, dans lequel la machine électrique (100) est intégrée, est limitée à une puissance génératrice maximale de la machine électrique (100), et/ou une assistance motrice de la machine électrique (100) est répartie en particulier linéairement sur une position de pédale d'accélérateur d'un véhicule dans lequel la machine électrique (100) est utilisée.

8. Unité de calcul (140) configurée pour mettre en œuvre un procédé selon l'une des revendications précédentes.

9. Programme informatique qui permet à une unité de calcul (140) de mettre en œuvre un procédé selon l'une des revendications 1 à 7, lorsqu'il est exécuté sur l'unité de calcul (140).

10. Support de mémoire lisible par machine sur lequel est stocké un programme informatique selon la revendication 9.

# Fig. 1

# Fig. 2

Fig. 3

# Fig. 4

# Fig. 5

# Fig. 6

170

T    $I_{ex, max}$

$U_{dc}, \omega_{el}$

610    P

600

160

$U_{d, min}, U_{d, max}$
$U_{q, min}, U_{q, max}$

$I_{d, min}, I_{q, min}$
$I_{d, max}, I_{q, max}$

$I_{dq, Limit,}$
$I_{dc, Limit, min,}$
$I_{dc, Limit, max}$

$M_{min}, M_{max}$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102015117813 A1
- US 20140292240 A1
- US 8475328 B2
- US 84110737 B2